# EUROPEAN PATENT SPECIFICATION

(11) **EP 2 458 901 B1**
(45) Date of publication and mention of the grant of the patent: **20.03.2019**
(21) Application number: 10841931.8
(22) Date of filing: 27.08.2010
(51) Int. Cl.: H04W 72/04, H04W 76/15

(54) **CONTROL METHOD, SYSTEM AND RADIO NETWORK CONTROLLER FOR NON-SERVING UPLINK ENHANCED RADIO LINK OF DUAL-CARRIER SYSTEM**
STEUERVERFAHREN, -SYSTEM UND FUNKNETZWERKSTEUERGERÄT FÜR EINE NON-SERVING-UPLINK-VERSTÄRKTE FUNKVERKNÜPFUNG IN EINEM ZWEITRÄGERSYSTEM
CONTRÔLEUR DE RÉSEAU RADIOÉLECTRIQUE, PROCÉDÉ ET SYSTÈME DE COMMANDE POUR LIAISON RADIO AMÉLIORÉE DE LIAISON MONTANTE DE NON DESSERTE DE SYSTÈME À DEUX PORTEUSES

(30) Priority: 11.01.2010 CN 201010001626
(43) Date of publication of application: 30.05.2012
(73) Proprietor: ZTE Corporation, Shenzhen, Guangdong 518057 (CN)
(72) Inventor: ZHANG, Yu, Shenzhen, Guangdong 518057 (CN); CHENG, Xiang, Shenzhen, Guangdong 518057 (CN)
(74) Representative: Schröer, Gernot H.
(86) International application number: PCT/CN2010/076427
(87) International publication number: WO 2011/082588

(56) References cited:
- CN-A- 1 765 096
- CN-A- 101 455 113
- CN-A- 101 600 245
- ERICSSON: "NBAP/RNSAP for deactivation or activation of secondary carrier in non serving Node B", 3GPP DRAFT; R3-092474, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050391982, [retrieved on 2009-10-03]
- "3rd Generation Partnership Project; Technical Specification Group Radio Access Network; Enhanced uplink; Overall description; Stage 2 (Release 9)", 1 September 2009 (2009-09-01), 3GPP STANDARD; 3GPP TS 25.319, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, PAGE(S) 1 - 70, XP050367640, * paragraph [0019] *
- ERICSSON: "Protocol on Iub/Iur for deactivation or activation of secondary carrier in non serving Node B", 3GPP DRAFT; R3-092003, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shenzhen, China; 20090820, 20 August 2009 (2009-08-20), XP050353347, [retrieved on 2009-08-20]
- ERICSSON: "DC-HSUPA (de)activation", 3GPP DRAFT; R1-091892 DC-HSUPA (DE)ACTIVATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. San Francisco, USA; 20090428, 28 April 2009 (2009-04-28), XP050339383, [retrieved on 2009-04-28]

## Description

### Technical Field

The present invention relates to a radio communication system, and more especially, to a method and a system for controlling non-serving uplink enhanced radio link in a dual carrier system.

### Background of the Related Art

In the radio communication system, a radio link refers to a logical connection between a terminal and an access point of radio access system, and is generally comprised of one or multiple radio bearer transmissions in the physical implementation. There is at most one radio link between the terminal and the access point of radio access system (which generally refers to a cell). An Interconnection of type B (IUB for short) interface is a logical interface between a Radio Network Controller (RNC for short) and Node B, and an Interconnection of RNC (IUR for short) interface (an interconnection interface between RNCs) is an interface used by the RNC for performing the interaction of signaling and data with other RNCs and it is an interconnection bond between radio network subsystems.

In the radio communication system, a Node B Application Part (NBAP for short) is that: a protocol framework of IUB interface is composed of two function layers, namely: a radio network layer and a transmission layer. The NBAP is a part of the radio network layer of IUB interface and specifies the functional behavior of the Node B correctly and completely. A Radio Network Subsystem Application Part (RNSAP for short) is a dedicated protocol of IUR interface for completing the mobility management of terminal connected with the radio network controller across radio network subsystem, which comprises functions such as handover, radio resource processing and synchronization and so on between radio network subsystems.

A Radio link management function refers to a Control Radio Network Controller (CRNC for short) controlling the dedicated resource of Node B through a radio link control process, which relates to the basic processes of dedicated resource setup and deletion, including a "radio link establishment" control process, "radio link increment" control process, "radio link synchronous reconfiguration" and "radio link asynchronous reconfiguration", etc. A Radio Link Identity (RL ID for short) is a unique identity of the radio link related to the terminal. Therefore, the RL ID is used as a unified resource identity between the radio network controller, the Node B and terminal in the radio link control process.

A radio network control entity comprises a Node B and a radio network controller. With regard to the radio network controller, when a terminal establishes a connection to the radio access network and generates a soft handover at the IUR interface, resources of more than one radio network controllers will be used.

The radio network controller further comprises a Serving Radio Network Controller (SRNC for short) and a Drift Radio Network Controller (DRNC for short) besides a control radio network controller, wherein the SRNC is a radio network controller for maintaining an interface connection of terminal and core network. The DRNC is the other radio network controllers except the SRNC. The number of DRNCs of one terminal can be more than one.

In the existing system, the purpose of the high speed uplink packet access technology is to improve the capacity and data throughput in the uplink direction and reduce the delay in a dedicated channel. The high speed uplink packet access technology introduces a new transmission channel: an Enhanced Dedicated Channel (E-DCH for short), which performs an improvement on the implementation of physical layer and media access control layer and can reach a maximum theoretical uplink data rate of 5.6 megabits per second. The high speed uplink packet access technology keeps the features of the soft handover, and with regard to a terminal, there will be an activated set of the E-DCH if a soft handover occurs.

With the development of technology, the dual carrier high speed uplink packet access technology (which makes the terminal can send data by the high speed uplink packet access technology on two carriers, so that the uplink data rate is increased at the double) is expected to be introduced into the existing system. In addition, the dual carrier high speed uplink packet access technology and existing dual carrier high speed downlink packet access technology are bound for usage, which are called dual carrier technology. The application scenario of dual carrier technology comprises: uplink single carrier high speed uplink packet access technology and downlink single carrier high speed downlink packet access technology; uplink single carrier high speed uplink packet access technology and downlink dual carrier high speed downlink packet access technology; uplink dual carrier high speed uplink packet access technology and downlink dual carrier high speed downlink packet access technology.

The dual carrier in the dual carrier technology comprises: a carrier of the High-Speed Dedicated Physical Control Channel (HS-DPCCH for short), which is called as a main carrier, and the other one in the dual carrier is called as an auxiliary carrier. With regard to one terminal, the carrier of each layer in the dual carrier has its own independent activated set of enhanced dedicated channel. On the frequency corresponding to the main carrier and in the activated set of enhanced dedicated channel of the main carrier, the Node B to which the serving enhanced dedicated channel radio link of the main carrier belongs is called as a serving Node B, and the other Nodes B are called as non-serving Nodes B. Similarly, on the frequency corresponding to the auxiliary carrier and in the activated set of enhanced dedicated channel of the auxiliary carrier, the Node B to which the serving enhanced dedicated channel radio link of the auxiliary carrier belongs is called as a serving Node B, and the other Nodes B are called as non-serving Nodes B. The radio links belonging to the non-serving Nodes B can only correspond to the uplink main carrier or uplink auxiliary carrier, thus a scenario of establishing a non-serving uplink enhanced dedicated channel radio link appears in the condition that there is no corresponding non-serving downlink high speed shared channel radio link.

In the radio link control process, when the serving downlink shared channel radio links are established or increased, the uplink enhanced dedicated channel radio links belonging to the same carrier layer (the main carrier layer or the auxiliary carrier layer) are established or increased correspondingly, and the frequency information controlled by the uplink enhanced dedicated channel radio link can refer to downlink high speed shared channel radio link corresponding to the uplink enhanced dedicated channel radio link. However, according to the current technology and standardized processing protocol, and with regard to the non-serving uplink enhanced radio link, there is such a problem: a control can't be performed on the non-serving uplink enhanced dedicated channel radio link in the condition that there is no corresponding non-serving downlink high speed shared channel radio link. The document ERICSSON: "NBAP/RNSAP for deactivation or activation of secondary carrier in non serving Node B", 3GPP DRAFT; R3-092474, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), discloses the handling of deactivation or activation of a seconday carrier with a non-serving Node B.

### Summary of the Invention

The technical problem to be solved by the present invention is to provide a control method and system for non-serving uplink enhanced radio link of dual carrier system.

In order to solve the foregoing problem, the present invention provides a method for controlling non-serving uplink enhanced radio link of dual carrier system, which comprises:
A method for controlling non-serving uplink enhanced radio link of dual carrier system, comprising: in a process of a non-serving cell performing a control of an enhanced radio link on a terminal using dual carrier high speed packet access technology, in a condition that there is no corresponding non-serving downlink high speed shared channel radio link, a radio network controller informing a non-serving Node B to which the terminal belongs of carrier attribute information of the enhanced radio link; and the non-serving Node B performing the control of the enhanced radio link according to the carrier attribute information.

The step of the radio network controller informing the non-serving Node B of the carrier attribute information of the enhanced radio link comprises:
a serving radio network controller sending the carrier attribute information of the enhanced radio link to a drift radio network controller through a radio link management signaling of Radio Network Subsystem Application Part (RNSAP) protocol layer via an Interconnection of RNC (IUR) interface; and
the drift radio network controller sending the carrier attribute information of the enhanced radio link to a non-serving Node B through a radio link management signaling of Node B Application Part (NBAP) protocol layer via an Interconnection of type B (IUB) interface.

The step of the radio network controller informing the non-serving Node B of the carrier attribute information of the enhanced radio link comprises:
a serving radio network controller sending the carrier attribute information of the enhanced radio link to the non-serving Node B through the radio link management signaling of the Node B Application Part (NBAP) protocol layer via the Interconnection of type B (IUB) interface.

The carrier attribute information is configured to indicate that a carrier in which the enhanced radio link is located belongs to a main carrier or an auxiliary carrier in a dual carrier.

When the control process is a radio link establishment process, the control performed by the non-serving Node B on the radio link is: establishing the enhanced radio link.

When the control process is a radio link increment process, the control performed by the non-serving Node B on the radio link is: increasing the enhanced radio link.

When the control process is a radio link synchronous reconfiguration process, the control performed by the non-serving Node B on the radio link is: reconfiguring the enhanced radio link synchronously.

When the control process is a radio link asynchronous reconfiguration process, the control performed by the non-serving Node B on the radio link is: reconfiguring the enhanced radio link asynchronously.

In the step of the radio network controller informing the non-serving Node B to which the terminal belongs of the carrier attribute information of the enhanced radio link, the radio network controller also informs the non-serving Node B of identity information of the enhanced radio link to be controlled.

In order to solve the foregoing problem, the present invention provides a system for controlling non-serving uplink enhanced radio link of dual carrier system, which comprises a radio network controller and a non-serving Node B, wherein, the radio network controller is configured to: in a condition that there is no corresponding non-serving downlink high speed shared channel radio link, inform the non-serving Node B to which the terminal belongs of carrier attribute information of an enhanced radio link in a process of a non-serving cell performing a control of the enhanced radio link on a terminal using dual carrier high speed packet access technology; the non-serving Node B is configured to: implement the control of the enhanced radio link according to the carrier attribute information.

In order to solve the foregoing problem, the present invention also provides a radio network controller, which is configured to:
in a condition that there is no corresponding non-serving downlink high speed shared channel radio link, inform a non-serving Node B to which a terminal belongs of carrier attribute information of an enhanced radio link in a process of a non-serving cell performing a control of the enhanced radio link on the terminal using dual carrier high speed packet access technology, so that the non-serving Node B implements the control on the enhanced radio link according to the carrier attribute information.

When the radio network controller is a Serving Radio Network Controller (SRNC), the SRNC is further configured to: send carrier attribute information of the enhanced radio link to a Drift Radio Network Controller (DRNC) through a radio link management signaling of Radio Network Subsystem Application Part (RNSAP) protocol layer via an Interconnection of RNC (IUR) interface, so that the DRNC informs a non-serving Node B to which the terminal belongs of the carrier attribute information of the enhanced radio link, and when the radio network controller is a DRNC, the DRNC is further configured to: send the carrier attribute information of the enhanced radio link to a non-serving Node B through a radio link management signaling of Node B Application Part (NBAP) protocol layer via an Interconnection of type B (IUB) interface.

The radio network controller is configured to: inform the non-serving Node B of the carrier attribute information of the enhanced radio link according to the following ways:
a serving radio network controller sending the carrier attribute information of the enhanced radio link to the non-serving Node B through the radio link management signaling of the Node B Application Part (NBAP) protocol layer via an Interconnection of type B (IUB) interface.

The carrier attribute information is configured to indicate that a carrier in which the enhanced radio link is located belongs to a main carrier or an auxiliary carrier in a dual carrier.

The radio network controller is further configured to: inform the non-serving Node B of identity information of the enhanced radio link to be controlled.

The present invention performs the transmission and acquisition of the carrier attribute information of the radio link between the radio access network control entities through including the carrier attribute information of a specified radio link in the signaling of the radio link control process, so that the terminal can establish an uplink enhanced dedicated channel according to the carrier attribute information of the radio link, and solve the practicable application of the dual carrier technology in the special scenarios by tiny modifications, thereby avoiding the defects in the existing technology and making the dual carrier high speed packet access technology practicable.

### Brief Description of Drawings

FIG. 1 is a schematic diagram of the setting scenarios of examples according to the present invention;
FIG. 2 is a schematic diagram of the example 1 according to the present invention;
FIG. 3 is a schematic diagram of the example 2 according to the present invention;
FIG. 4 is a schematic diagram of the example 3 according to the present invention;
FIG. 5 is a schematic diagram of the example 4 according to the present invention;
FIG. 6 is a schematic diagram of the example 5 according to the present invention;
FIG. 7 is a schematic diagram of the example 6 according to the present invention;
FIG. 8 is a schematic diagram of the example 7 according to the present invention;
FIG. 9 is a schematic diagram of the example 8 according to the present invention.

### Preferred Embodiments of the Present Invention

As described in the part of background of the related art, the control can't be performed on the non-serving uplink enhanced dedicated channel radio link in the condition that there is no corresponding non-serving downlink high speed shared channel radio link, which is because there is no referable frequency information when controlling the non-serving uplink enhanced dedicated channel radio link. Therefore, when a non-serving Node B receives a related signaling for controlling the non-serving uplink enhanced channel radio link, it is puzzling whether the operation should be performed in the layer of the main carrier or in the layer of the auxiliary carrier.

The inventive concept of the present invention is: in a process of a non-serving cell performing a control of an enhanced radio link on a terminal using dual carrier high speed packet access technology, a radio network controller informing a non-serving Node B to which the terminal belongs of the carrier attribute information of the enhanced radio link, and the non-serving Node B implement a control on the enhanced radio link according to the carrier attribute information.

An enhanced radio link refers to an uplink radio link corresponding to the enhanced dedicated channel. The above enhanced radio link is a radio link object of specified operation in the radio link control process.

The carrier attribute information of the enhanced radio link is used for indicating that the carrier in which the enhanced radio link is located belongs to a main carrier or an auxiliary carrier in the dual carrier.

The above control process comprises one of the following processes: radio link establishment process, radio link increment process, radio link synchronous reconfiguration process and radio link asynchronous reconfiguration process. Correspondingly, the control performed by the non-serving Node B on the radio link comprises: establishing an enhanced radio link, increasing an enhanced radio link, synchronous reconfiguration enhanced radio link and asynchronous reconfiguration enhanced radio link.

The step of the radio network controller informing the non-serving Node B of the carrier attribute information of the enhanced radio link comprises: a serving radio network controller informs a non-serving Node B which the terminal belongs to of the carrier attribute information of the enhanced radio link through a radio link management signaling. In a scenario of a drift radio network controller existing as a relay, the serving radio network controller sends the carrier attribute information of the enhanced radio link to a non-serving Node B through the drift radio network controller, and the signaling adopted by the serving radio network controller is a radio link management signaling, which is specifically:
When the radio link control process is a radio link establishment process, a serving radio network controller (SRNC) sends a "radio link establishment request" signaling to a drift radio network controller (DRNC) through RNSAP protocol layer via an IUR interface, and the "radio link establishment request" signaling includes the carrier attribute information of the enhanced radio link, and the DRNC forwards the radio link establishment request signaling including the carrier attribute information to a non-serving Node B through NBAP protocol layer via an IUB interface. Refer to the example 1.

When the radio link control process is a radio link establishment process, a SRNC sends a "radio link establishment request" signaling to a non-serving Node B through NBAP protocol layer via an IUB interface, and the "radio link establishment request" signaling includes the carrier attribute information of the enhanced radio link. Refer to the example 2.

When the radio link control process is a radio link increment process, a SRNC sends a "radio link increment request" signaling to a DRNC through RNSAP protocol layer via an IUR interface, and the "radio link increment request" signaling includes the carrier attribute information of the enhanced radio link, and the DRNC forwards the "radio link increment request" signaling including the carrier attribute information to a non-serving Node B through NBAP protocol layer via an IUB interface. Refer to the example 3.

When the radio link control process is a radio link increment process, a SRNC sends a "radio link increment request" signaling to a non-serving Node B through NBAP protocol layer via an IUB interface, and the "radio link increment request" signaling includes the carrier attribute information of the enhanced radio link. Refer to the example 4.

When the radio link control process is a radio link synchronous reconfiguration process, a SRNC sends a "radio link reconfiguration preparation" signaling to a DRNC through RNSAP protocol layer via an IUR interface, and the "radio link reconfiguration preparation" signaling includes the carrier attribute information of the enhanced radio link, and the DRNC forwards the "radio link reconfiguration preparation" signaling including the carrier attribute information to a non-serving Node B through NBAP protocol layer via an IUB interface. Refer to the example 5.

When the radio link control process is a radio link synchronous reconfiguration process, a SRNC sends a "radio link reconfiguration preparation" signaling to a non-serving Node B through NBAP protocol layer via an IUB interface, and the "radio link reconfiguration preparation" signaling includes the carrier attribute information of the enhanced radio link. Refer to the example 6.

When the radio link control process is a radio link asynchronous reconfiguration process, a SRNC sends a "radio link reconfiguration request" signaling to a DRNC through RNSAP protocol layer via an IUR interface, and the "radio link reconfiguration request" signaling includes the carrier attribute information of the enhanced radio link, and the DRNC forwards the "radio link reconfiguration request" signaling including the carrier attribute information to a non-serving Node B through NBAP protocol layer via an IUB interface. Refer to the example 7.

When the radio link control process is a radio link asynchronous reconfiguration process, a SRNC sends a "radio link reconfiguration request" signaling to a non-serving Node B through NBAP protocol layer via an IUB interface, and the "radio link reconfiguration request" signaling includes the carrier attribute information of the enhanced radio link. Refer to the example 8.

When performing the radio link control process on the terminal, the radio network controller also informs the non-serving Node B of the identity information of the enhanced radio link to be controlled, thereby indicating the radio link to be controlled by the non-serving Node B.

Below the present invention will be further described with reference to drawings and specific examples, and the Nodes B in the following examples all refer to the non-serving Nodes B of the terminal using dual carrier high speed packet access technology.

### Example 1

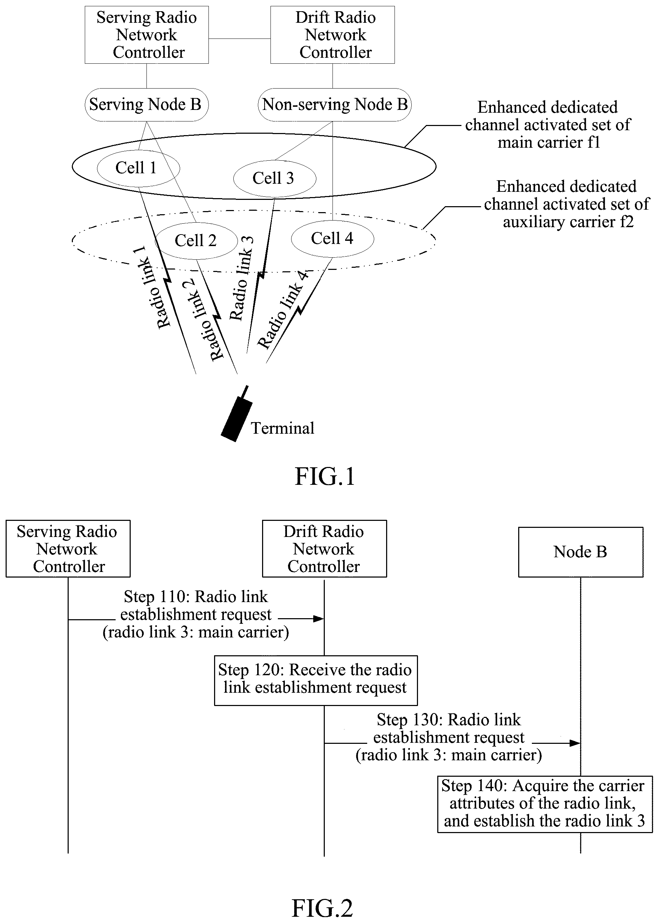

As shown in FIG. 2, the example 1 is a process of: when the radio link control process is a radio link establishment process, a serving radio network controller (SRNC) sending a "radio link establishment request" signaling to a drift radio network controller (DRNC) through RNSAP protocol layer via an IUR interface, and the DRNC sending the "radio link establishment request" signaling to a Node B through NBAP protocol layer via an IUB interface, which comprises the following steps.

Step 110: when performing a radio link establishment, a SRNC sends a "radio link establishment request" signaling to a DRNC, and informs the DRNC of the carrier attribute information of the carrier in which the established enhanced radio link is located and the identity information of the enhanced radio link to be established;
in the example, the carrier attribute information of the carrier in which the enhanced radio link is located comprises a main carrier, and a radio link identity is 3. The radio link establishment request indicates the DRNC to establish an enhanced radio link with an identity to be 3 on the main carrier.

Step 120: the DRNC receives the "radio link establishment request" signaling.

Step 130: the DRNC forwards the "radio link establishment request" signaling including the carrier attribute and identity information of the radio link to the Node B, thereby indicating the Node B to establish the enhanced radio link;
the radio link establishment request indicates the Node B to establish the enhanced radio link with an identity to be 3 on the main carrier.

Step 140: the Node B establishes the enhanced radio link with an identity to be 3 on the main carrier after receiving the "radio link establishment request" signaling.

The step of the Node B establishing the enhanced radio link with an identity to be 3 on the main carrier refers to: a Node B commanding the terminal to establish an enhanced radio link on the main carrier.

As informed of the carrier attribute information of the enhanced radio link, the Node B can indicate the terminal to establish the enhanced radio link on the main carrier, thereby avoiding the defect that an non-serving uplink enhanced dedicated channel radio link can't be established, for there is no non-serving downlink high speed shared channel radio link in the existing technology.

### Example 2

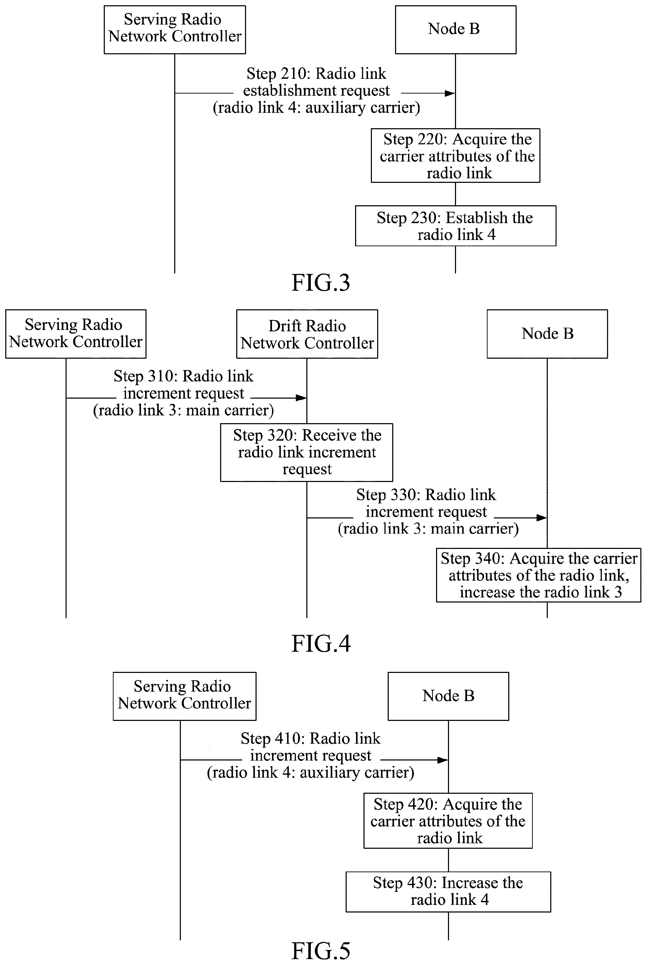

As shown in FIG. 3, the example 2 is a process of: when the radio link control process is a radio link establishment process, a serving radio network controller (SRNC) sending a "radio link establishment request" signaling to a Node B through NBAP protocol layer via an IUB interface, which comprises the following steps.

Step 210: when performing a radio link establishment, a SRNC sends a "radio link establishment request" signaling to a Node B, and informs the Node B of the carrier attribute information of the carrier in which the established enhanced radio link is located and the identity information of the enhanced radio link to be established;
in the example, the carrier attribute information of the carrier in which the enhanced radio link is located comprises an auxiliary carrier, and a radio link identity is 4. The radio link establishment request indicates the Node B to establish an enhanced radio link with an identity to be 4 on the auxiliary carrier.

Step 220: the Node B receives the "radio link establishment request" signaling, and obtains the carrier attribute information and the identity information of the radio link therein.

Step 230: the Node B establishes the enhanced radio link with an identity to be 4 on the auxiliary carrier according to the obtained information. The step of the Node B establishing the enhanced radio link with an identity to be 4 on the auxiliary carrier refers to: a Node B commanding the terminal to establish an enhanced radio link on the auxiliary carrier. As informed of the carrier attribute information of the radio link, the Node B can indicate the terminal to establish the enhanced radio link on the auxiliary carrier, thereby avoiding the defect that an non-serving uplink enhanced dedicated channel radio link can't be established, for there is no non-serving downlink high speed shared channel radio link in the existing technology.

### Example 3

As shown in FIG. 4, the example 3 is a process of: when the radio link control process is a radio link increment process, a serving radio network controller (SRNC) sending a "radio link increment request" signaling to a drift radio network controller (DRNC) through RNSAP protocol layer via an IUR interface, and the DRNC sending the "radio link increment request" signaling to a Node B through NBAP protocol layer via an IUB interface, which comprises the following steps.

Step 310: when performing a radio link increment, a SRNC sends a "radio link increment request" signaling to a DRNC, and informs the DRNC of the carrier attribute information of the carrier in which the increased enhanced radio link is located and the identity information of the enhanced radio link to be established;
in the example, the carrier attribute information of the carrier in which the enhanced radio link is located comprises a main carrier, and a radio link identity is 3. The radio link increment request indicates the DRNC to increase an enhanced radio link with an identity to be 3 on the main carrier.

Step 320: the DRNC receives the "radio link increment request" signaling.

Step 330: the DRNC forwards the "radio link increment request" signaling including the carrier attribute and the identity information of the radio link to the Node B, and indicates the Node B to increase the enhanced radio link;
the radio link increment request indicates the Node B to increase the enhanced radio link with an identity to be 3 on the main carrier.

Step 340: the Node B increases the enhanced radio link with an identity to be 3 on the main carrier after receiving the "radio link increment request" signaling.

The step of the Node B increasing the enhanced radio link with an identity to be 3 on the main carrier refers to: a Node B commanding the terminal to increase an enhanced radio link on the main carrier.
As obtaining the carrier attribute information of the radio link, the Node B can indicate the terminal to increase the enhanced radio link on the main carrier, thereby avoiding the defect that an non-serving uplink enhanced dedicated channel radio link can't be increased, for there is no non-serving downlink high speed shared channel radio link in the existing technology.

### Example 4

As shown in FIG. 5, the example 4 is a process of: when the radio link control process is a radio link increment process, a serving radio network controller (SRNC) sending a "radio link increment request" signaling to a Node B through NBAP protocol layer via an IUB interface, which comprises the following steps.

Step 410: when performing a radio link establishment, a SRNC sends a "radio link increment request" signaling to a Node B, and informs the Node B of the carrier attribute information of the carrier in which the established enhanced radio link is located and the identity information of the enhanced radio link to be established;
in the example, the carrier attribute information of the carrier in which the enhanced radio link is located comprises an auxiliary carrier, and a radio link identity is 4. The radio link increment request indicates the Node B to increase an enhanced radio link with an identity to be 4 on the auxiliary carrier.

Step 420: the Node B receives the "radio link increment request" signaling, and obtains the carrier attribute and the identity information of the radio link therein.

Step 430: the Node B increases the enhanced radio link with an identity to be 4 on the auxiliary carrier according to the obtained information. The step of the Node B increasing the enhanced radio link with an identity to be 4 on the auxiliary carrier refers to: a Node B commanding the terminal to increase an enhanced radio link on the auxiliary carrier. As informed of the carrier attribute information of the enhanced radio link, the Node B can indicate the terminal to increase the enhanced radio link on the auxiliary carrier, thereby avoiding the defect that an non-serving uplink enhanced dedicated channel radio link can't be increased, for there is no non-serving downlink high speed shared channel radio link in the existing technology.

### Example 5

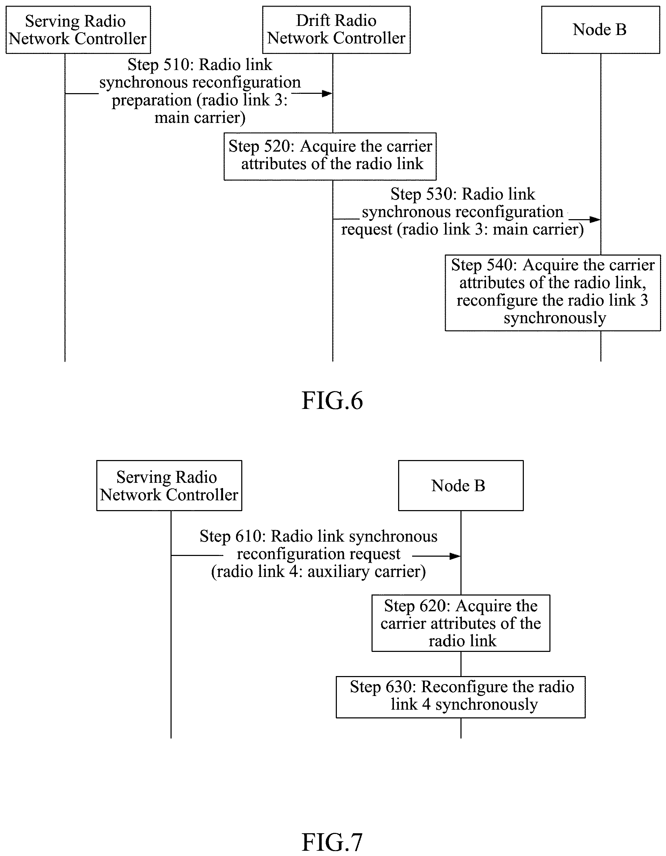

As shown in FIG. 6, the example 5 is a process of: when the radio link control process is a radio link synchronous reconfiguration process, a serving radio network controller (SRNC) sending a "radio link synchronous reconfiguration preparation" signaling to a drift radio network controller (DRNC) through RNSAP protocol layer via an IUR interface, and the DRNC sending a "radio link synchronous reconfiguration request" signaling to a Node B through NBAP protocol layer via an IUB interface, which comprises the following steps.

Step 510: when performing the radio link synchronous reconfiguration, a SRNC sends a "radio link synchronous reconfiguration preparation" signaling to a DRNC, and informs the DRNC of the carrier attribute information of the carrier in which the synchronously reconfigured enhanced radio link is located and the identity information of the enhanced radio link to be reconfigured;
in the example, the carrier attribute information of the carrier in which the enhanced radio link is located comprises a main carrier, and a radio link identity is 3. The radio link synchronous reconfiguration preparation signaling indicates the DRNC to synchronously reconfigure an enhanced radio link with an identity to be 3 on the main carrier.

Step 520: the DRNC receives the "radio link synchronous reconfiguration preparation" signaling, obtains the carrier attribute and the identity of the radio link therein, and constructs a "radio link synchronous reconfiguration request" signaling.

Step 530: the DRNC sends the "radio link synchronous reconfiguration request" signaling including the carrier attribute and the identity information of the radio link to the Node B, and indicates the Node B to synchronously reconfigure the enhanced radio link;
the radio link synchronous reconfiguration request signaling indicates the Node B to synchronously reconfigure the enhanced radio link with an identity to be 3 on the main carrier.

Step 540: the Node B synchronously reconfigures the enhanced radio link with an identity to be 3 on the main carrier after receiving the "radio link synchronous reconfiguration request" signaling.
The step of the Node B synchronously reconfiguring the enhanced radio link with an identity to be 3 on the main carrier refers to: a Node B commanding the terminal to synchronously reconfigure an enhanced radio link on the main carrier.
As informed of the carrier attribute information of the radio link, the Node B can indicate the terminal to synchronously reconfigure the enhanced radio link on the main carrier, thereby avoiding the defect that an non-serving uplink enhanced dedicated channel radio link can't be synchronously reconfigured, for there is no non-serving downlink high speed shared channel radio link in the existing technology.

### Example 6

As shown in FIG. 7, the example 6 is a process of: when the radio link control process is a radio link synchronous reconfiguration process, a serving radio network controller (SRNC) sending a "radio link synchronous reconfiguration request" signaling to a Node B through NBAP protocol layer via an IUB interface, which comprises the following steps.

Step 610: when performing the radio link synchronous reconfiguration, a SRNC sends a "radio link synchronous reconfiguration request" signaling to a Node B, and informs the Node B of the carrier attribute information of the carrier in which the synchronously reconfigured enhanced radio link is located and the identity information of the enhanced radio link to be reconfigured;
in the example, the carrier attribute information of the carrier in which the enhanced radio link is located comprises an auxiliary carrier, and a radio link identity is 4. The radio link synchronous reconfiguration request signaling indicates the Node B to synchronously reconfigure an enhanced radio link with an identity to be 4 on the auxiliary carrier.

Step 620: the Node B receives the "radio link synchronous reconfiguration request" signaling, and obtains the carrier attribute and the identity information of the radio link therein.

Step 630: the Node B synchronously reconfigures the enhanced radio link with an identity to be 4 on the auxiliary carrier according to the obtained information.
The step of the Node B synchronously reconfiguring the enhanced radio link with an identity to be 4 on the auxiliary carrier refers to: a Node B commanding the terminal to synchronously reconfigure an enhanced radio link on the auxiliary carrier.
As informed of the carrier attribute information of the radio link, the Node B can indicate the terminal to synchronously reconfigure the enhanced radio link on the auxiliary carrier, thereby avoiding the defect that an non-serving uplink enhanced dedicated channel radio link can't be synchronously reconfigured, for there is no non-serving downlink high speed shared channel radio link in the existing technology.

### Example 7

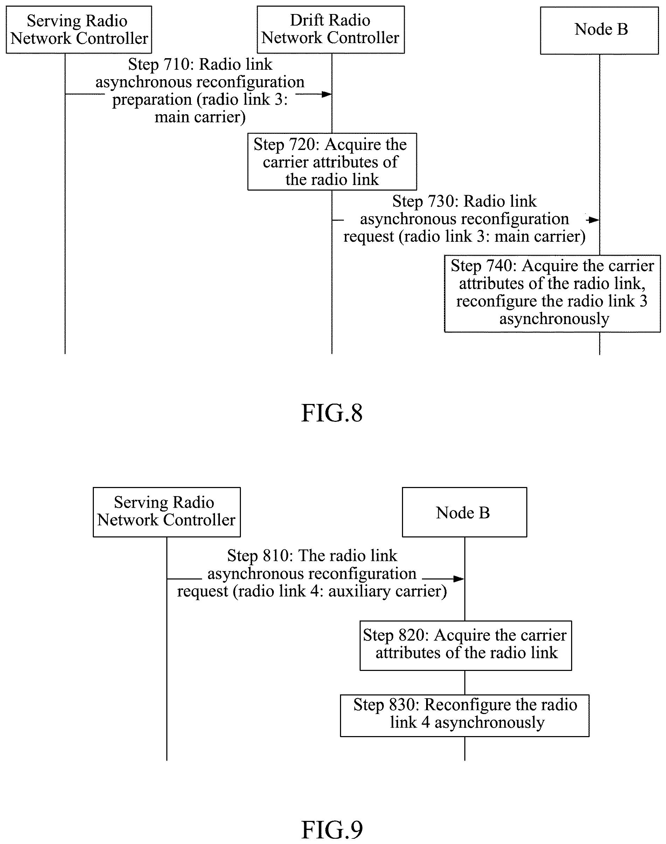

As shown in FIG. 8, the example 7 is a process of: when the radio link control process is a radio link asynchronous reconfiguration process, a serving radio network controller (SRNC) sending a "radio link asynchronous reconfiguration preparation" signaling to a drift radio network controller (DRNC) through RNSAP protocol layer via an IUR interface, and the DRNC sending a "radio link asynchronous reconfiguration request" signaling to a Node B through NBAP protocol layer via an IUB interface, which comprises the following steps.

Step 710: when performing the radio link asynchronous reconfiguration, a SRNC sends a radio link asynchronous reconfiguration preparation signaling to a DRNC, and informs the DRNC of the carrier attribute information of the carrier in which the asynchronously reconfigured enhanced radio link is located and the identity information of the enhanced radio link to be reconfigured;
in the example, the carrier attribute information of the carrier in which the enhanced radio link is located comprises a main carrier, and a radio link identity is 3. The radio link asynchronous reconfiguration preparation signaling indicates the DRNC to asynchronously reconfigure an enhanced radio link with an identity to be 3 on the main carrier.

Step 720: the DRNC receives the "radio link asynchronous reconfiguration preparation" signaling, obtains the carrier attribute and the identity information of the radio link therein, and constructs a "radio link asynchronous reconfiguration request" signaling.

Step 730: the DRNC sends the "radio link asynchronous reconfiguration request" signaling including the carrier attribute and the identity information of the radio link to the Node B, and indicates the Node B to asynchronously reconfigure the enhanced radio link;
the radio link asynchronous reconfiguration request signaling indicates the Node B to asynchronously reconfigure the enhanced radio link with an identity to be 3 on the main carrier.

Step 740: the Node B asynchronously reconfigures the enhanced radio link with an identity to be 3 on the main carrier after receiving the "radio link asynchronous reconfiguration request" signaling.
The step of the Node B asynchronously reconfiguring the enhanced radio link with an identity to be 3 on the main carrier refers to: a Node B commanding the terminal to asynchronously reconfigure an enhanced radio link on the main carrier.
As informed of the carrier attribute information of the radio link, the Node B can indicate the terminal to asynchronously reconfigure the enhanced radio link on the main carrier, thereby avoiding the defect that an non-serving uplink enhanced dedicated channel radio link can't be asynchronously reconfigured, for there is no non-serving downlink high speed shared channel radio link in the existing technology.

### Example 8

As shown in FIG. 9, the example 8 is a process of: when the radio link control process is a radio link asynchronous reconfiguration process, a serving radio network controller (SRNC) sending a "radio link asynchronous reconfiguration request" signaling to a Node B through NBAP protocol layer via an IUB interface, which comprises the following steps.

Step 810: when performing the radio link asynchronous reconfiguration, a SRNC sends a "radio link asynchronous reconfiguration request" signaling, and informs the Node B of the carrier attribute information of the carrier in which the asynchronously reconfigured enhanced radio link is located and the identity information of the enhanced radio link to be reconfigured;
in the example, the carrier attribute information of the carrier in which the enhanced radio link is located comprises an auxiliary carrier, and a radio link identity is 4. The radio link asynchronous reconfiguration request signaling indicates the Node B to asynchronously reconfigure an enhanced radio link with an identity to be 4 on the auxiliary carrier.

Step 820: the Node B receives the "radio link asynchronous reconfiguration request" signaling, and obtains the carrier attribute and the radio link identity therein.

Step 830: the Node B asynchronously reconfigures the enhanced radio link with an identity to be 4 on the auxiliary carrier according to the obtained information.

The step of the Node B asynchronously reconfiguring the enhanced radio link with an identity to be 4 on the auxiliary carrier refers to: a Node B commanding the terminal to asynchronously reconfigure an enhanced radio link on the auxiliary carrier.

As informed of the carrier attribute information of the radio link, the Node B can indicate the terminal to asynchronously reconfigure the enhanced radio link on the auxiliary carrier, thereby avoiding the defect that an non-serving uplink enhanced dedicated channel radio link can't be asynchronously reconfigured, for there is no non-serving downlink high speed shared channel radio link in the existing technology.

The control system for implementing the above method comprises: a radio network controller and a non-serving Node B.
The radio network controller is configured to: inform a non-serving Node B to which the terminal belongs of the carrier attribute information of the enhanced radio link in a process of a non-serving cell performing a control of an enhanced radio link on a terminal using dual carrier high speed packet access technology;
the non-serving Node B is configured to: implement a control on the enhanced radio link according to the carrier attribute information.

The example of present invention also provides a radio network controller, which is configured to:
inform a non-serving Node B to which the terminal belongs of carrier attribute information of the enhanced radio link in a process of a non-serving cell performing a control of an enhanced radio link on a terminal using dual carrier high speed packet access technology, so that the non-serving Node B implements the control of the enhanced radio link according to the carrier attribute information.

When the radio network controller is a Serving Radio Network Controller (SRNC), the SRNC is further configured to: send carrier attribute information of the enhanced radio link to a Drift Radio Network Controller (DRNC) through a radio link management signaling of Radio Network Subsystem Application Part (RNSAP) protocol layer via an Interconnection of RNC (IUR) interface, so that the DRNC informs a non-serving Node B to which the terminal belongs of the carrier attribute information of the enhanced radio link, and
when the radio network controller is a DRNC, the DRNC is further configured to: send the carrier attribute information of the enhanced radio link to a non-serving Node B through a radio link management signaling of Node B Application Part (NBAP) protocol layer via an Interconnection of type B (IUB) interface.

The radio network controller is configured to: inform the non-serving Node B of the carrier attribute information of the enhanced radio link according to the following ways:
a serving radio network controller sending the carrier attribute information of the enhanced radio link to the non-serving Node B through the radio link management signaling of the Node B Application Part (NBAP) protocol layer via an Interconnection of type B (IUB) interface.

The carrier attribute information is configured to indicate that a carrier in which the enhanced radio link is located belongs to a main carrier or an auxiliary carrier in a dual carrier.

The radio network controller is further configured to: inform the non-serving Node B of identity information of the enhanced radio link to be controlled.

It should be noted that: the examples of the present invention and each feature in the examples can be combined mutually and can all fall into the protection scope of the present invention if there are no conflicts. Furthermore, the steps shown in the flow chart of the drawings can be executed in the computer system such as a group of computer executable instructions; moreover, the flow chart shows the logical sequence, but the shown or described steps can be executed by a sequence which is different from the logical sequence herein in certain conditions.

### Industrial Applicability

The present invention performs the transmission and acquisition of the carrier attribute information of the radio link between the radio access network control entities through including the carrier attribute information of a specified radio link in the signaling of the radio link control process, so that the terminal can establish an uplink enhanced dedicated channel according to the carrier attribute information of the radio link, and solve the practicable application of the dual carrier technology in the special scenarios by tiny modifications, thereby avoiding the defects in the existing technology and making the dual carrier high speed packet access technology practicable.

## Claims

1. A method for controlling non-serving uplink enhanced radio link of dual carrier system, comprising:
in a process of a non-serving cell performing a control of an enhanced radio link on a terminal using dual carrier high speed packet access technology, in a condition that there is no corresponding non-serving downlink high speed shared channel radio link, a radio network controller informing a non-serving Node B to which the terminal belongs of carrier attribute information of the enhanced radio link; and
the non-serving Node B performing the control of the enhanced radio link according to the carrier attribute information.

2. The method according to claim 1, wherein:
the step of the radio network controller informing the non-serving Node B of the carrier attribute information of the enhanced radio link comprises:
a serving radio network controller sending the carrier attribute information of the enhanced radio link to a drift radio network controller through a radio link management signaling of Radio Network Subsystem Application Part (RNSAP) protocol layer via an Interconnection of RNC (IUR) interface; and
the drift radio network controller sending the carrier attribute information of the enhanced radio link to the non-serving Node B through a radio link management signaling of Node B Application Part (NBAP) protocol layer via an Interconnection of type B (IUB) interface.

3. The method according to claim 1, wherein:
the step of the radio network controller informing the non-serving Node B of the carrier attribute information of the enhanced radio link comprises:
a serving radio network controller sending the carrier attribute information of the enhanced radio link to the non-serving Node B through a radio link management signaling of Node B Application Part (NBAP) protocol layer via an Interconnection of type B (IUB) interface.

4. The method according to claim 1 or 2 or 3, wherein:
the carrier attribute information is configured to indicate that a carrier in which the enhanced radio link is located belongs to a main carrier or an auxiliary carrier in a dual carrier.

5. The method according to claim 1 or 2 or 3, wherein:
when the control process is a radio link establishment process, the control performed by the non-serving Node B for radio link is:
establishing the enhanced radio link.

6. The method according to claim 1 or 2 or 3, wherein:
when the control process is a radio link increment process, the control performed by the non-serving Node B for radio link is:
increasing the enhanced radio link.

7. The method according to claim 1 or 2 or 3, wherein:
when the control process is a radio link synchronous reconfiguration process, the control performed by the non-serving Node B for radio link is: reconfiguring the enhanced radio link synchronously.

8. The method according to claim 1 or 2 or 3, wherein:
when the control process is a radio link asynchronous reconfiguration process, the control performed by the non-serving Node B for radio link is: reconfiguring the enhanced radio link asynchronously.

9. The method according to claim 1 or 2 or 3, wherein:
in the step of the radio network controller informing the non-serving Node B to which the terminal belongs of the carrier attribute information of the enhanced radio link, the radio network controller further informs the non-serving Node B of identity information of the enhanced radio link to be controlled.

10. A system for controlling non-serving uplink enhanced radio link of dual carrier system, comprising a radio network controller and a non-serving Node B, wherein:
the radio network controller is configured to: in a condition that there is no corresponding non-serving downlink high speed shared channel radio link, inform the non-serving Node B to which the terminal belongs of carrier attribute information of an enhanced radio link in a process of a non-serving cell performing a control of the enhanced radio link on a terminal using dual carrier high speed packet access technology;
the non-serving Node B is configured to: implement the control of the enhanced radio link according to the carrier attribute information.

11. A radio network controller, which is configured to:
in a condition that there is no corresponding non-serving downlink high speed shared channel radio link, inform a non-serving Node B to which a terminal belongs of carrier attribute information of an enhanced radio link in a process of a non-serving cell performing a control of the enhanced radio link on the terminal using dual carrier high speed packet access technology, so that the non-serving Node B implements the control on the enhanced radio link according to the carrier attribute information.

12. The radio network controller according to claim 11, wherein:
when the radio network controller is a Serving Radio Network Controller (SRNC), the SRNC is further configured to: send the carrier attribute information of the enhanced radio link to a Drift Radio Network Controller (DRNC) through a radio link management signaling of Radio Network Subsystem Application Part (RNSAP) protocol layer via an Interconnection of RNC (IUR) interface, so that the DRNC informs the non-serving Node B to which the terminal belongs of the carrier attribute information of the enhanced radio link; and
when the radio network controller is a DRNC, the DRNC is further configured to: send the carrier attribute information of the enhanced radio link to the non-serving Node B through a radio link management signaling of Node B Application Part (NBAP) protocol layer via an Interconnection of type B (IUB) interface.

13. The radio network controller according to claim 11, wherein:
the radio network controller is configured to inform the non-serving Node B of the carrier attribute information of the enhanced radio link according to following ways:
a serving radio network controller sending the carrier attribute information of the enhanced radio link to the non-serving Node B through a radio link management signaling of Node B Application Part (NBAP) protocol layer via an Interconnection of type B (IUB) interface.

14. The radio network controller according to claim 11 or 12 or 13, wherein:
the carrier attribute information is configured to indicate that a carrier in which the enhanced radio link is located belongs to a main carrier or an auxiliary carrier in a dual carrier.

15. The radio network controller according to claim 11 or 12 or 13, wherein:
the radio network controller is further configured to: inform the non-serving Node B of identity information of the enhanced radio link to be controlled.

## Patentansprüche

1. Verfahren zur Steuerung einer verstärkten Funkstrecke mit nicht-bedienender Aufwärtsstrecke eines Zweiträgersystems, umfassend:
in einem Vorgang eines Durchführens einer Steuerung einer verstärkten Funkstrecke an einem Endgerät unter Verwendung von Zweiträger-Hochgeschwindigkeitspaketzugriffstechnologie durch eine nicht-bedienende Zelle in einem Zustand, in dem keine entsprechende Hochgeschwindigkeitsfunkstrecke mit nicht-bedienender Abwärtsstrecke und gemeinsam genutztem Kanal vorliegt, wobei ein Funknetzwerk-Controller einen nicht-bedienenden Knoten B, zu dem das Endgerät gehört, über eine Trägerattributinformation der verstärkten Funkstrecke informiert; und
Durchführen der Steuerung der verstärkten Funkstrecke durch den nicht-bedienenden Knoten B gemäß der Trägerattributinformation.

2. Verfahren nach Anspruch 1, wobei
der Schritt des Informierens des nicht-bedienenden Knotens B über die Trägerattributinformation der verstärkten Funkstrecke durch den Funknetzwerk-Controller umfasst:
Senden der Trägerattributinformation der verstärkten Funkstrecke durch einen bedienenden Funknetzwerk-Controller an einen Drift-Funknetzwerk-Controller durch eine Funkstreckenmanagementsignalisierung einer Radio-Network-Subsystem-Application-Part-Protokollschicht (RNSAP-Protokollschicht) mittels einer Interconnection-of-RNC-Schnittstelle (IUR-Schnittstelle) und Senden der Trägerattributinformation der verstärkten Funkstrecke durch den Drift-Funknetzwerk-Controller an den nicht-bedienenden Knoten B durch eine Funkstreckenmanagementsignalisierung einer Node-B-Application-Part-Protokollschicht (NBAP-Protokollschicht) mittels einer Interconnection-of-type-B-Schnittstelle (IUB-Schnittstelle).

3. Verfahren nach Anspruch 1, wobei
der Schritt des Informierens des nicht-bedienenden Knotens B über die Trägerattributinformation der verstärkten Funkstrecke durch den Funknetzwerk-Controller umfasst:
Senden der Trägerattributinformation der verstärkten Funkstrecke durch einen bedienenden Funknetzwerk-Controller an den nicht-bedienenden Knoten B durch eine Funkstreckenmanagementsignalisierung einer Node-B-Application-Part-Protokollschicht (NBAP-Protokollschicht) mittels einer Interconnection-of-type-B-Schnittstelle (IUB-Schnittstelle).

4. Verfahren nach Anspruch 1 oder 2 oder 3, wobei:
die Trägerattributinformation dazu konfiguriert ist, anzugeben, dass ein Träger, in dem die verstärkte Funkstrecke sich befindet, zu einem Hauptträger oder einem Nebenträger in einem Zweiträger gehört.

5. Verfahren nach Anspruch 1 oder 2 oder 3, wobei:
wenn der Steuervorgang ein Funkstreckenaufbauvorgang ist, die von dem nicht-bedienenden Knoten B für die Funkstrecke durchgeführte Steuerung ist: Aufbauen der verstärkten Funkstrecke.

6. Verfahren nach Anspruch 1 oder 2 oder 3, wobei:
wenn der Steuervorgang ein Funkstreckensteigerungsvorgang ist, die von dem nicht-bedienenden Knoten B für die Funkstrecke durchgeführte Steuerung ist:
Vergrößern der verstärkten Funkstrecke.

7. Verfahren nach Anspruch 1 oder 2 oder 3, wobei:
wenn der Steuervorgang ein synchroner Funkstreckenrekonfigurationsvorgang ist, die von dem nicht-bedienenden Knoten B für die Funkstrecke durchgeführte Steuerung ist: synchrones Rekonfigurieren der verstärkten Funkstrecke.

8. Verfahren nach Anspruch 1 oder 2 oder 3, wobei:
wenn der Steuervorgang ein asynchroner Funkstreckenrekonfigurationsvorgang ist, die von dem nicht-bedienenden Knoten B für die Funkstrecke durchgeführte Steuerung ist: asynchrones Rekonfigurieren der verstärkten Funkstrecke.

9. Verfahren nach Anspruch 1 oder 2 oder 3, wobei:
in dem Schritt des Informierens des nicht-bedienenden Knotens B, zu dem das Endgerät gehört, über die Trägerattributinformation der verstärkten Funkstrecke durch den Funknetzwerk-Controller der Funknetzwerk-Controller weiterhin den nicht-bedienenden Knoten B über eine Identitätsinformation der zu steuernden verstärkten Funkstrecke informiert.

10. System zur Steuerung einer verstärkten Funkstrecke mit nicht-bedienender Aufwärtsstrecke eines Zweiträgersystems, das einen Funknetzwerk-Controller und einen nicht-bedienenden Knoten B umfasst, wobei:
der Funknetzwerk-Controller konfiguriert ist zum: in einem Zustand, in dem keine entsprechende Hochgeschwindigkeitsfunkstrecke mit nicht-bedienender Abwärtsstrecke und gemeinsam genutztem Kanal vorliegt, Informieren des nicht-bedienenden Knotens B, zu dem das Endgerät gehört, über eine Trägerattributinformation einer verstärkten Funkstrecke in einem Vorgang eines Durchführens einer Steuerung der verstärkten Funkstrecke an einem Endgerät unter Verwendung von Zweiträger-Hochgeschwindigkeitspaketzugriffstechnologie durch eine nicht-bedienende Zelle;
der nicht-bedienende Knoten B konfiguriert ist zum: Implementieren der Steuerung der verstärkten Funkstrecke gemäß der Trägerattributinformation.

11. Funknetzwerk-Controller, der konfiguriert ist zum:
in einem Zustand, in dem keine entsprechende Hochgeschwindigkeitsfunkstrecke mit nicht-bedienender Abwärtsstrecke und gemeinsam genutztem Kanal vorliegt, Informieren eines nicht-bedienenden Knotens B, zu dem ein Endgerät gehört, über eine Trägerattributinformation einer verstärkten Funkstrecke in einem Vorgang eines Durchführens einer Steuerung der verstärkten Funkstrecke an dem Endgerät unter Verwendung von Zweiträger-Hochgeschwindigkeitspaketzugriffstechnologie durch eine nicht-bedienende Zelle, so dass der nicht-bedienende Knoten B die Steuerung an der verstärkten Funkstrecke gemäß der Trägerattributinformation implementiert.

12. Funknetzwerk-Controller nach Anspruch 11, wobei:
wenn der Funknetzwerk-Controller ein bedienender Funknetzwerk-Controller (SRNC) ist, der SRNC weiterhin konfiguriert ist zum: Senden der Trägerattributinformation der verstärkten Funkstrecke an einen Drift-Funknetzwerk-Controller (DRNC) durch eine Funkstreckenmanagementsignalisierung einer Radio-Network-Subsystem-Application-Part-Protokollschicht (RNSAP-Protokollschicht) mittels einer Interconnection-of-RNC-Schnittstelle (IUR-Schnittstelle), so dass der DRNC den nicht-bedienenden Knoten B, zu dem das Endgerät gehört, über die Trägerattributinformation der verstärkten Funkstrecke informiert; und
wenn der Funknetzwerk-Controller ein DRNC ist, der DRNC weiterhin konfiguriert ist zum: Senden der Trägerattributinformation der verstärkten Funkstrecke an den nicht-bedienenden Knoten B durch eine Funkstreckenmanagementsignalisierung einer Node-B-Application-Part-Protokollschicht (NBAP-Protokollschicht) mittels einer Interconnection-of-type-B-Schnittstelle (IUB-Schnittstelle).

13. Funknetzwerk-Controller nach Anspruch 11, wobei:
der Funknetzwerk-Controller dazu konfiguriert ist, den nicht-bedienenden Knoten B über die Trägerattributinformation der verstärkten Funkstrecke gemäß den folgenden Methoden zu informieren:
Senden der Trägerattributinformation der verstärkten Funkstrecke durch einen bedienenden Funknetzwerk-Controller an den nicht-bedienenden Knoten B durch eine Funkstreckenmanagementsignalisierung einer Node-B-Application-Part-Protokollschicht (NBAP-Protokollschicht) mittels einer Interconnection-of-type-B-Schnittstelle (IUB-Schnittstelle).

14. Funknetzwerk-Controller nach Anspruch 11 oder 12 oder 13, wobei:
die Trägerattributinformation dazu konfiguriert ist, anzugeben, dass ein Träger, in dem die verstärkte Funkstrecke sich befindet, zu einem Hauptträger oder einem Nebenträger in einem Zweiträger gehört.

15. Funknetzwerk-Controller nach Anspruch 11 oder 12 oder 13, wobei:
der Funknetzwerk-Controller weiterhin konfiguriert ist zum: Informieren des nicht-bedienenden Knotens B über eine Identitätsinformation der zu steuernden verstärkten Funkstrecke.

## Revendications

1. Procédé pour commander une liaison radio améliorée de liaison montante non de desserte d'un système à double porteuse, comprenant:
dans un processus de réalisation, par une cellule non de desserte, d'une commande d'une liaison radio améliorée sur un terminal à l'aide d'une technologie d'accès à un paquet à vitesse élevée à double porteuse, dans une condition dans laquelle il n'existe pas de liaison radio de canal partagé à vitesse élevée de liaison descendante non de desserte correspondante, un dispositif de commande de réseau radio informe un noeud B non de desserte auquel le terminal appartient d'informations d'attribut de porteuse de la liaison radio améliorée; et
le noeud B non de desserte réalise la commande de la liaison radio améliorée selon les informations d'attribut de porteuse.

2. Procédé selon la revendication 1, dans lequel:
l'étape dans laquelle le dispositif de commande de réseau radio informe le noeud B non de desserte des informations d'attribut de porteuse de la liaison radio améliorée comprend:
un dispositif de commande de réseau radio de desserte envoie les informations d'attribut de porteuse de la liaison radio améliorée à un dispositif de commande de réseau radio de dérive par l'intermédiaire d'une signalisation de gestion de liaison radio d'une couche de protocole de partie d'application de sous-système de réseau radio (RNSAP) par l'intermédiaire d'une interface d'interconnexion de RNC (IUR); et
le dispositif de commande de réseau radio de dérive envoie les informations d'attribut de porteuse de la liaison radio améliorée au noeud B non de desserte par l'intermédiaire d'une signalisation de gestion de liaison radio d'une couche de protocole de partie d'application de noeud B (NBAP) par l'intermédiaire d'une interface d'interconnexion de type B (IUB).

3. Procédé selon la revendication 1, dans lequel:
l'étape dans laquelle le dispositif de commande de réseau radio informe le noeud B non de desserte des informations d'attribut de porteuse de la liaison radio améliorée comprend:
un dispositif de commande de réseau radio de desserte envoie les informations d'attribut de porteuse de la liaison radio améliorée au noeud B non de desserte par l'intermédiaire d'une signalisation de gestion de liaison radio d'une couche de protocole de partie d'application de noeud B (NBAP) par l'intermédiaire d'une interface d'interconnexion de type B (IUB).

4. Procédé selon la revendication 1 ou 2 ou 3, dans lequel:
les informations d'attribut de porteuse sont configurées pour indiquer qu'une porteuse dans laquelle la liaison radio améliorée est située appartient à une porteuse principale ou à une porteuse auxiliaire dans une double porteuse.

5. Procédé selon la revendication 1 ou 2 ou 3, dans lequel:
lorsque le processus de commande est un processus d'établissement de liaison radio, la commande réalisée par le noeud B non de desserte pour une liaison radio est:
établir la liaison radio améliorée.

6. Procédé selon la revendication 1 ou 2 ou 3, dans lequel:
lorsque le processus de commande est un processus d'incrémentation de liaison radio, la commande réalisée par le noeud B non de desserte pour une liaison radio est:
augmenter la liaison radio améliorée.

7. Procédé selon la revendication 1 ou 2 ou 3, dans lequel:
lorsque le processus de commande est un processus de reconfiguration synchrone de liaison radio, la commande réalisée par le noeud B non de desserte pour une liaison radio est:
reconfigurer la liaison radio améliorée de manière synchrone.

8. Procédé selon la revendication 1 ou 2 ou 3, dans lequel:
lorsque le processus de commande est un processus de reconfiguration asynchrone de liaison radio, la commande réalisée par le noeud B non de desserte pour une liaison radio est:
reconfigurer la liaison radio améliorée de manière asynchrone.

9. Procédé selon la revendication 1 ou 2 ou 3, dans lequel:
dans l'étape dans laquelle le dispositif de commande de réseau radio informe le noeud B non de desserte auquel le terminal appartient des informations d'attribut de porteuse de la liaison radio améliorée, le dispositif de commande de réseau radio informe en outre le noeud B non de desserte d'informations d'identité de la liaison radio améliorée à commander.

10. Système pour commander une liaison radio améliorée de liaison montante non de desserte d'un système à double porteuse, comprenant un dispositif de commande de réseau radio et un noeud B non de desserte, dans lequel:
le dispositif de commande de réseau radio est configuré pour: dans une condition dans laquelle il n'existe pas de liaison radio de canal partagé à vitesse élevée de liaison descendante non de desserte correspondante, informer le noeud B non de desserte auquel le terminal appartient d'informations d'attribut de porteuse d'une liaison radio améliorée dans un processus de réalisation, par une cellule non de desserte, d'une commande de la liaison radio améliorée sur un terminal à l'aide d'une technologie d'accès à un paquet à vitesse élevée à double porteuse ;
le noeud B non de desserte est configuré pour: mettre en oeuvre la commande de la liaison radio améliorée selon les informations d'attribut de porteuse.

11. Dispositif de commande de réseau radio, qui est configuré pour:
dans une condition dans laquelle il n'existe pas de liaison radio de canal partagé à vitesse élevée de liaison descendante non de desserte correspondante, informer un noeud B non de desserte auquel un terminal appartient d'informations d'attribut de porteuse d'une liaison radio améliorée dans un processus de réalisation, par une cellule non de desserte, d'une commande de la liaison radio améliorée sur le terminal à l'aide d'une technologie d'accès à un paquet à vitesse élevée à double porteuse, de telle sorte que le noeud B non de desserte met en oeuvre la commande sur la liaison radio améliorée selon les informations d'attribut de porteuse.

12. Dispositif de commande de réseau radio selon la revendication 11, dans lequel:
lorsque le dispositif de commande de réseau radio est un dispositif de commande de réseau radio de desserte (SRNC), le SRNC est en outre configuré pour: envoyer les informations d'attribut de porteuse de la liaison radio améliorée à un dispositif de commande de réseau radio de dérive (DRNC) par l'intermédiaire d'une signalisation de gestion de liaison radio d'une couche de protocole de partie d'application de sous-système de réseau radio (RNSAP) par l'intermédiaire d'une interface d'interconnexion de RNC (IUR), de telle sorte que le DRNC informe le noeud B non de desserte auquel le terminal appartient des informations d'attribut de porteuse de la liaison radio améliorée; et
lorsque le dispositif de commande de réseau radio est un DRNC, le DRNC est en outre configuré pour: envoyer les informations d'attribut de porteuse de la liaison radio améliorée au noeud B non de desserte par l'intermédiaire d'une signalisation de gestion de liaison radio d'une couche de protocole de partie d'application de noeud B (NBAP) par l'intermédiaire d'une interface d'interconnexion de type B (IUB).

13. Dispositif de commande de réseau radio selon la revendication 11, dans lequel:
le dispositif de commande de réseau radio est configuré pour informer le noeud B non de desserte des informations d'attribut de porteuse de la liaison radio améliorée des manières suivantes:
un dispositif de commande de réseau radio de desserte envoie les informations d'attribut de porteuse de la liaison radio améliorée au noeud B non de desserte par l'intermédiaire d'une signalisation de gestion de liaison radio d'une couche de protocole de partie d'application de noeud B (NBAP) par l'intermédiaire d'une interface d'interconnexion de type B (IUB).

14. Dispositif de commande de réseau radio selon la revendication 11 ou 12 ou 13, dans lequel:
les informations d'attribut de porteuse sont configurées pour indiquer qu'une porteuse dans laquelle la liaison radio améliorée est située appartient à une porteuse principale ou à une porteuse auxiliaire dans une double porteuse.

15. Dispositif de commande de réseau radio selon la revendication 11 ou 12 ou 13, dans lequel:
le dispositif de commande de réseau radio est en outre configuré pour: informer le noeud B non de desserte d'informations d'identité de la liaison radio améliorée à commander.
